# EUROPEAN PATENT SPECIFICATION

(11) **EP 3 782 806 B1**
(45) Date of publication and mention of the grant of the patent: **04.03.2026**
(21) Application number: 20191757.2
(22) Date of filing: 19.08.2020
(51) Int. Cl.: B32B 3/12, B32B 5/18, B32B 9/00, B32B 9/04, B32B 15/00, B32B 15/04, B32B 27/06, B32B 27/28, B32B 27/38

(54) **HIGH TEMPERATURE HYBRID COMPOSITE LAMINATES**
HOCHTEMPERATUR-HYBRID-VERBUNDLAMINATE
STRATIFIÉS COMPOSITES HYBRIDES À HAUTE TEMPÉRATURE

(30) Priority: 20.08.2019 US 201916545368
(43) Date of publication of application: 24.02.2021
(73) Proprietor: RTX Corporation, Farmington, CT 06032 (US)
(72) Inventor: EASTMAN, Scott Alan, Glastonbury, CT 06033 (US); ALMS, Justin B., Coventry, CT 06238 (US); WANG, Xuemei, South Windsor, CT 06074 (US)
(74) Representative: Dehns

(56) References cited:
- EP-A1- 3 088 559
- EP-A1- 3 269 934
- GB-A- 2 053 367
- US-A1- 2005 048 305
- US-A1- 2015 118 441
- US-B1- 6 511 762

## Description

### BACKGROUND

The present disclosure is directed to a composite laminate. More particularly polymer matrix composite substrates are provided with thermal barrier coating covered with a heat reflective coating.

A gas turbine engine includes a high-pressure spool, a combustion system, and a low-pressure spool disposed within an engine case to form a generally axial, serial flow path about an engine centerline. The high-pressure spool includes a high-pressure turbine, a high-pressure shaft extending axially forward from the high-pressure turbine, and a high-pressure compressor connected to a forward end of the high-pressure shaft. The low-pressure spool includes a low-pressure turbine disposed downstream of the high-pressure turbine, a low-pressure shaft, typically extending coaxially through the high-pressure shaft, and a low-pressure compressor connected to a forward end of the low-pressure shaft, forward of the high-pressure compressor. The combustion system is disposed between the high-pressure compressor and the high-pressure turbine and receives compressed air from the compressors and fuel provided by a fuel injection system. During the combustion process, compressed air is mixed with the fuel in a combustion chamber. The combustion process produces high-energy gases to produce thrust and turn the high- and low-pressure turbines, driving the compressors to sustain the combustion process.

The trend of new aerospace platforms desiring continually higher use temperatures, current polymer matrix composites (PMC) are beginning to reach their limits due to use temperature. Higher temperature metal matrix composites (MMC) and ceramic matrix composites (CMC) can provide higher use temperatures but at a penalty to weight and/or durability. A hybrid composite approach would enable an extension of PMC use temperature while limiting the weight increase of these materials. EP3269934A1, EP3088559A1, US 2015/118441A1 and US6511762B1 disclose laminate structures of the prior art. US 2005/048305 A1 discloses a composite laminate comprising a substrate having two sides, a thermal barrier coating coupled to one side of said substrate; and a reflective coating disposed on said thermal barrier coating, said reflective coating comprising a double layer comprising a conformal metal layer capped with a conformal inorganic coating.

### SUMMARY

In accordance with the present disclosure, there is provided a composite laminate according to claim 1.

In an optional embodiment, the composite laminate further comprises an air flow layer coupled to the substrate on the cold side.

In an optional embodiment, the air flow layer comprises at least one of a honeycomb and an open cell foam material.

In an optional embodiment, the air flow layer comprises flow channels configured to flow cooling air.

In an optional embodiment, the composite laminate further comprises an additional composite layer coupled to the air flow layer opposite the substrate, the additional composite layer comprises perforations that fluidly communicate with the flow channels of the air flow layer, wherein the perforations are configured to flow cooling fluid.

In an optional embodiment, the thermal barrier layer comprises at least one layer.

In an optional embodiment, the thermal barrier layer comprises a preform sheet.

In accordance with the present disclosure, there is provided a composite laminate cooling flow duct for a gas turbine engine according to claim 7.

In an optional embodiment, the air flow layer comprises flow channels configured to flow cooling air.

In an optional embodiment, the air flow layer comprises at least one of a honeycomb and an open cell foam material.

In an optional embodiment, the air flow layer comprises a carbon reinforced composite with milled air flow channels.

In an optional embodiment, the reflective coating can include a thickness of from 5 nanometers - 5000 nanometers.

In accordance with the present disclosure, there is provided a process for protecting a composite laminate cooling flow duct for a gas turbine engine according to claim 10.

In an optional embodiment, the metal layer comprises dimensions ranging from 50 nanometers to 1000 nanometers.

In an optional embodiment, the thermal barrier coating comprises a matrix of materials formed from ultra-high inorganic materials including a filler material held together with binder.

In an optional embodiment, the air flow layer comprises flow channels configured to flow cooling air.

In an optional embodiment, the air flow layer comprises at least one of a honeycomb and an open cell foam material.

Other details of the composite laminate are set forth in the following detailed description and the accompanying drawings wherein like reference numerals depict like elements.

### BRIEF DESCRIPTION OF THE DRAWINGS

FIG. 1 is a simplified cross-sectional view of a gas turbine engine.
FIG. 2 is a cross-sectional view of an exemplary composite laminate.
FIG. 3 is a cross-sectional view of an exemplary composite laminate.

### DETAILED DESCRIPTION

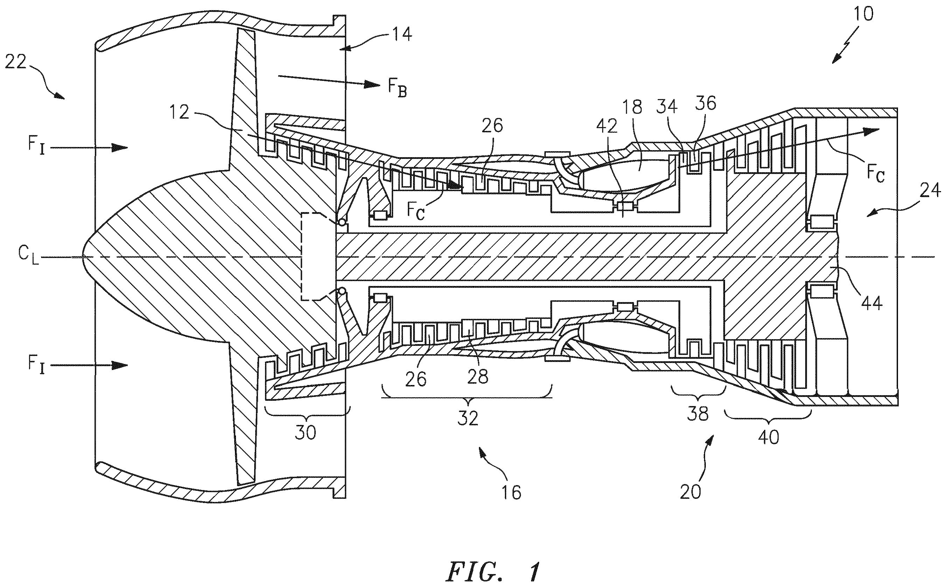

FIG. 1 is a simplified cross-sectional view of a gas turbine engine 10 in accordance with embodiments of the present disclosure. Turbine engine 10 includes fan 12 positioned in bypass duct 14. Turbine engine 10 also includes compressor section 16, combustor (or combustors) 18, and turbine section 20 arranged in a flow series with upstream inlet 22 and downstream exhaust 24. During the operation of turbine engine 10, incoming airflow F₁ enters inlet 22 and divides into core flow F_{C} and bypass flow F_{B}, downstream of fan 12. Core flow F_{C} continues along the core flowpath through compressor section 16, combustor 18, and turbine section 20, and bypass flow F_{B} proceeds along the bypass flowpath through bypass duct 14.

Compressor 16 includes stages of compressor vanes 26 and blades 28 arranged in low pressure compressor (LPC) section 30 and high pressure compressor (HPC) section 32. Turbine section 20 includes stages of turbine vanes 34 and turbine blades 36 arranged in high pressure turbine (HPT) section 38 and low pressure turbine (LPT) section 40. HPT section 38 is coupled to HPC section 32 via HPT shaft 42, forming the high pressure spool. LPT section 40 is coupled to LPC section 30 and fan 12 via LPT shaft 44, forming the low pressure spool. HPT shaft 42 and LPT shaft 44 are typically coaxially mounted, with the high and low pressure spools independently rotating about turbine axis (centerline) C_{L}.

Combustion gas exits combustor 18 and enters HPT section 38 of turbine 20, encountering turbine vanes 34 and turbines blades 36. Turbine vanes 34 turn and accelerate the flow of combustion gas, and turbine blades 36 generate lift for conversion to rotational energy via HPT shaft 42, driving HPC section 32 of compressor 16. Partially expanded combustion gas flows from HPT section 38 to LPT section 40, driving LPC section 30 and fan 12 via LPT shaft 44. Exhaust flow exits LPT section 40 and turbine engine 10 via exhaust nozzle 24. In this manner, the thermodynamic efficiency of turbine engine 10 is tied to the overall pressure ratio (OPR), as defined between the delivery pressure at inlet 22 and the compressed air pressure entering combustor 18 from compressor section 16. As discussed above, a higher OPR offers increased efficiency and improved performance. It will be appreciated that various other types of turbine engines can be used in accordance with the embodiments of the present disclosure.

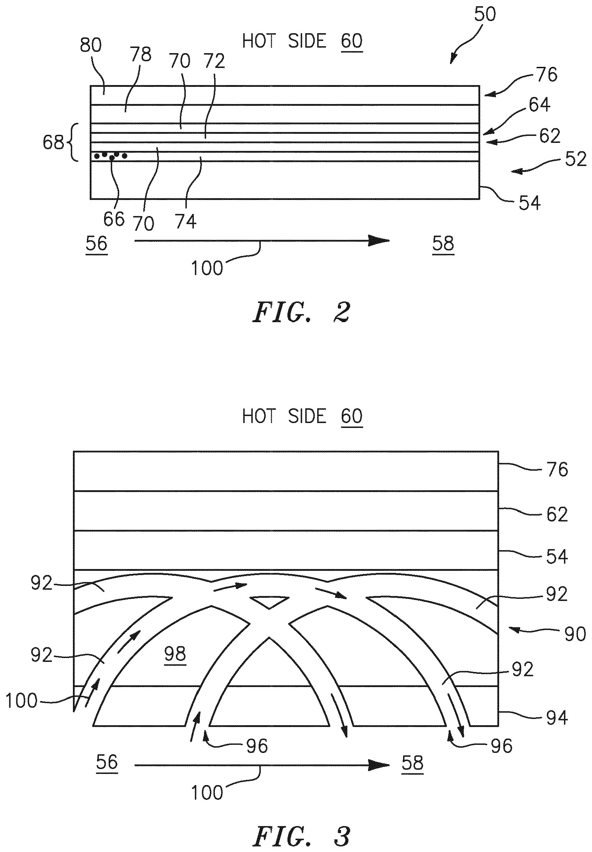

FIG. 2 is a simplified cross-sectional view of an exemplary composite laminate 50. The composite laminate 50 includes a composite layer 52. The composite layer 52 can be a substrate 54 that forms the structure within a fluid passage or air flow ducting 56. The composite laminate 50 has a cold side 58 and a hot side 60 opposite the cold side 58. In an exemplary embodiment, the difference in temperature between the cold side 58 and the hot side 60 can be greater than 100 degrees Fahrenheit. The substrate 54 can form a portion of the duct 56. The substrate 54 can be a high temperature (>300°F or >148°C) air flow ducting for aerospace use. The substrate 54 can comprise a polymer ducting made from thermoplastics such as (polyether ether ketone) PEEK, (polyether ketone ketone) PEKK, (polyaryl ether ketone) PAEK, polyetherimides such as Ultem^{™}, polyphenylene sulfide, and composites thereof. The substrate 54 can comprise a thermoset composite ducting that is made from fiber reinforced epoxy, polyimide and phthalonitrile, or bismaleimide composite. In another exemplary embodiment, the composite laminate 50 can comprise a polymer matrix material, a metal matrix material, and/or a ceramic matrix material.

A thermal barrier coating 62 is coupled to the substrate 54 proximate the hot side 60 and opposite the cold side 58. The thermal barrier coating 62 can comprise a matrix of materials 64. The thermal barrier coating 62 matrix of materials 64 can be formed from ultra-high inorganic materials held together with binder (>75% inorganic content in as formed coating). In an exemplary embodiment the matrix material 64 can include filler 66. It is desired to include filler 66 with a low bulk thermal conductivity (W/mK). In an exemplary embodiment the low bulk thermal conductivity can be ≤ 0.5 W/mK and more specifically ≤ 0.3 W/mK and more specifically ≤ 0.1 W/mK. Bulk thermal conductivity is derived from measurements on the filler powder itself as conductivities of individual filler grains is very difficult. In another exemplary embodiment, the filler 66 can be a nanoscale material in at least one direction from 1-500 nm per particle. The nanoscale material can have a high aspect ratio ranging from 2-5000, more specifically 10 - 2500 and more specifically 100 - 2000. This high aspect ratio can be in relation to 1 or both orthogonal axis to the thickness of the filler resulting in either 1-D (rods / tubes) or 2-D (platelets). The filler 66 can promote oxidative protection by acting as a oxygen barrier to the underlying substrate as well as a gaseous barrier of volatile degradation products from the substrate out to the hot side and dissociation of hot spots. In an exemplary embodiment, the filler 66 can include clay, such as montmorillonite; micas, such as, vermiculite; metal oxides; metal nitrides; and the like.

The thermal barrier coating 62 can be applied sequentially (layer-by-layer) or applied in a single pass coating.

In an exemplary embodiment, layers 68 of highly inorganic platelet layers 70 can be separated by layers of highly inorganic spherical particulate or hollow nanospheres 72 (example of hollow nanospheres

The matrix material 64 can include a binder 74. The binder 74 can be water soluble polymer that has good interaction with the filler 66. In an exemplary embodiment, the binder can include polyvinyl alcohol, polyetherimid, poly (N-isopropylacrylamide).

The matrix material 64 can include a binder 74. The binder 74 can be solvent soluble polymer that has good interaction with the filler 66. In an exemplary embodiment, the binder can include polyurethane, polychloroprene, and polytetrafluoroethylene.

A reflective coating 76 is coupled to the thermal barrier coating 62. The reflective coating 76 comprises a conformal metal layer 78 capped with conformal inorganic coating 80 in a double layer for added infrared (IR) reflectivity. The metal reflective layer 78 can be any deposited metal. In exemplary embodiments, metal can be inert metal with examples including nickel, chrome, silver, gold, platinum and the like. The metal layer 78 can be very thin with dimensions ranging from 50 nanometers to 1000 nanometers. The capped inorganic coating 80 of this configuration can comprise similar materials as the reflective coating 76 described above.

The reflective coating 76 can withstand the thermal, oxidative, and abrasive environment of elevated temperature ducting in aerospace applications. The reflective layer 76 can reflect IR heat away from the cold side 58 duct 82 to reduce thermal load through the substrate 54 wall of the duct 56. In addition the reflective coating 76 can provide some mechanical durability / life extension to the underlying thermal barrier coating 62 as well as fill any surface porosity that may exist in the thermal barrier coating 62.

In another exemplary embodiment shown at FIG. 3, the composite substrate 54 can be coupled to an air flow layer 90. The air flow layer 90 is coupled to the composite substrate 54 opposite the thermal barrier coating 62. The air flow layer 90 can comprise a honeycomb and/or open cell foam material. The open cell material can include flow channels 92. In an alternative embodiment, the open cell foam material be configured to flow air without the flow channels 92.

An additional composite layer 94, can be coupled to the airflow layer 90 on an opposite side from the composite substrate 54, such that there is a hot side composite substrate 54 and a cold side composite layer 94 in the composite laminate 50. The composite layer 94 can include perforations 96 that fluidly communicate with the flow channels 92 of the air flow layer 90 and are configured to flow cooling fluid 98. The additional composite layer 94 can comprise a polymer matrix material. The additional composite layer 94 can comprise a polymer from thermoplastics such as (polyether ether ketone) PEEK, (polyether ketone ketone) PEKK, (polyaryl ether ketone) PAEK, polyetherimides such as Ultem^{™}, polyphenylene sulfide, and composites thereof.

In another exemplary embodiment, the air flow layer 90 can include a carbon reinforced composite with milled air flow channels 92.

The flow channels 92 and/or the open cell materials 98 can be configured to flow air 100 that can remove thermal energy from the substrate 54. The cooling air 100 can be supplied from the duct 56 and flow through the flow channels 92.

A technical advantage of the composite laminate includes the capacity to extend the operational temperature of the polymer matrix composites while minimizing the weight increase needed to improve the operational temperature.

There has been provided a composite laminate. While the composite laminate has been described in the context of specific embodiments thereof, other unforeseen alternatives, modifications, and variations may become apparent to those skilled in the art having read the foregoing description. Accordingly, it is intended to embrace those alternatives, modifications, and variations which fall within the scope of the appended claims.

## Claims

1. A composite laminate comprising:
a substrate (54) having a hot side (60) and a cold side (58) opposite said hot side (60);
a thermal barrier coating (62) coupled to said hot side (60) of said substrate (54); and
a reflective coating (76) disposed on and coupled to said thermal barrier coating (62), said reflective coating comprising a double layer comprising a conformal metal layer (78) capped with a conformal inorganic coating (80).

2. The composite laminate according to claim 1, further comprising:
an air flow layer (90) coupled to said substrate (54) on said cold side (58).

3. The composite laminate according to claim 2, wherein said air flow layer (90) comprises at least one of a honeycomb and an open cell foam material.

4. The composite laminate according to claim 2 or 3, wherein said air flow layer (90) comprises flow channels (92) configured to flow cooling air (100).

5. The composite laminate according to claim 4, further comprising:
an additional composite layer (94) coupled to said air flow layer (90) opposite said substrate (54), said additional composite layer (94) comprising perforations (96) that fluidly communicate with the flow channels (92) of the air flow layer (90), wherein said perforations (96) are configured to flow cooling fluid.

6. The composite laminate according to any preceding claim, wherein said thermal barrier coating (62) comprises:
at least one layer; and/or
a preform sheet.

7. A composite laminate cooling flow duct for a gas turbine engine comprising:
the composite laminate of claim 1, wherein the substrate (54) forms said duct, and said substrate (54) comprises one of a polymer ducting made from thermoplastics, a thermoset composite ducting made from one of fiber reinforced epoxy, polyimide and phthalonitrile, or bismaleimide composite, or a polymer matrix material;
an air flow layer (90) coupled to said substrate (54) on said cold side (58); and
an additional composite layer (94) coupled to said air flow layer (90) opposite said substrate (54), said additional composite layer (94) comprising perforations (96) that fluidly communicate with the air flow layer (90), wherein said perforations (96) are configured to flow cooling fluid.

8. The composite laminate of any of claims 1-6, or the flow duct according to claim 7, wherein said air flow layer (90) comprises a carbon reinforced composite with milled air flow channels.

9. The composite laminate of any of claims 1-6 or 8, or the flow duct according to claim 7 or 8, wherein the reflective coating (76) can include a thickness of from 5 nanometers - 5000 nanometers.

10. A process for protecting a composite laminate cooling flow duct for a gas turbine engine comprising:
forming said duct (14) from a substrate (54), said substrate (54) having a hot side (60) and a cold side (58) opposite said hot side (60);
coating said substrate (54) with a thermal barrier coating (62) coupled to said hot side (60) of said substrate (54);
coating said thermal barrier coating (62) with a reflective coating (76) coupled to said thermal barrier coating (62) opposite said substrate (54), said reflective coating comprising a double layer comprising a conformal metal layer (78) capped with a conformal inorganic coating (80);
coupling an air flow layer (90) to said substrate (54) on said cold side (58); and
coupling an additional composite layer (94) to said air flow layer (90) opposite said substrate (54), said additional composite layer (94) comprising perforations (96) that fluidly communicate with the air flow layer (90), wherein said perforations (96) are configured to flow cooling fluid.

11. The composite laminate of any of claims 1-6, 8 or 9, the flow duct of any of claims 7-9 or the process of claim 10, wherein said reflective coating (76) comprises a conformal inorganic coating in a single layer.

12. The composite laminate of any of claims 1-6, 8 or 9, the flow duct of any of claims 7-9 or the process of claim 10, wherein said conformal metal layer (78) comprises dimensions ranging from 50 nanometers to 1000 nanometers.

13. The composite laminate of any of claims 1-6, 8-9, 11 or 12, the flow duct of any of claims 7-9, 11 or 12, or the process of claim 10, 11, or 12, wherein said thermal barrier coating (62) comprises a matrix of materials formed from ultra-high inorganic materials including a filler material (66) held together with binder (74) such that an inorganic content of more than 75% is present in the formed thermal barrier coating.

14. The flow duct of any of claims 7-9 or 11-13, or the process of any of claims 10-13, wherein said air flow layer (90) comprises flow channels (92) configured to flow cooling air (100).

15. The flow duct of any of claims 7-9 or 11-14, or the process of any of claims 10-14, wherein said air flow layer (90) comprises at least one of a honeycomb and an open cell foam material.

## Patentansprüche

1. Verbundlaminat, umfassend:
ein Substrat (54), das eine warme Seite (60) und eine der warmen Seite (60) gegenüberliegende kalte Seite (58) aufweist;
eine Wärmedämmbeschichtung (62), die mit der warmen Seite (60) des Substrats (54) verbunden ist; und
eine reflektierende Beschichtung (76), die auf der Wärmedämmbeschichtung (62) angeordnet und damit verbunden ist, wobei die reflektierende Beschichtung eine Doppelschicht umfasst, die eine konforme Metallschicht (78) umfasst, die mit einer konformen anorganischen Beschichtung (80) bedeckt ist.

2. Verbundlaminat nach Anspruch 1, ferner umfassend:
eine Luftströmungsschicht (90), die auf der kalten Seite (58) mit dem Substrat (54) verbunden ist.

3. Verbundlaminat nach Anspruch 2, wobei die Luftströmungsschicht (90) mindestens eines von einem wabenförmigen und einem offenzelligen Schaummaterial umfasst.

4. Verbundlaminat nach Anspruch 2 oder 3, wobei die Luftströmungsschicht (90) Strömungskanäle (92) umfasst, die konfiguriert sind, um Kühlluft (100) durchzuströmen.

5. Verbundlaminat nach Anspruch 4, ferner umfassend:
eine zusätzliche Verbundschicht (94), die mit der dem Substrat (54) gegenüberliegenden Luftströmungsschicht (90) verbunden ist, wobei die zusätzliche Verbundschicht (94) Perforationen (96) umfasst, die fluidisch mit den Strömungskanälen (92) der Luftströmungsschicht (90) kommunizieren, wobei die Perforationen (96) konfiguriert sind, um Kühlfluid durchzuströmen.

6. Verbundlaminat nach einem der vorhergehenden Ansprüche, wobei die Wärmedämmbeschichtung (62) Folgendes umfasst:
mindestens eine Schicht; und/oder
eine Vorformplatte.

7. Verbundlaminat-Kühlströmungskanal für ein Gasturbinentriebwerk, umfassend:
das Verbundlaminat nach Anspruch 1, wobei das Substrat (54) den Kanal ausbildet und das Substrat (54) eines von einer Polymerkanalführung, die aus Thermoplasten hergestellt ist, einer duroplastischen Verbundkanalführung, die aus einem von einem faserverstärkten Epoxid-, Polyimid- und Phthalonitril- oder Bismaleimid-Verbundstoff hergestellt ist, oder einem Polymermatrixmaterial umfasst;
eine Luftströmungsschicht (90), die auf der kalten Seite (58) mit dem Substrat (54) verbunden ist; und
eine zusätzliche Verbundschicht (94), die mit der dem Substrat (54) gegenüberliegenden Luftströmungsschicht (90) verbunden ist, wobei die zusätzliche Verbundschicht (94) Perforationen (96) umfasst, die fluidisch mit der Luftströmungsschicht (90) kommunizieren, wobei die Perforationen (96) konfiguriert sind, um Kühlfluid durchzuströmen.

8. Verbundlaminat nach einem der Ansprüche 1-6 oder Strömungskanal nach Anspruch 7, wobei die Luftströmungsschicht (90) einen kohlenstoffverstärkten Verbundstoff mit gefrästen Luftströmungskanälen umfasst.

9. Verbundlaminat nach einem der Ansprüche 1-6 oder 8 oder Strömungskanal nach Anspruch 7 oder 8, wobei die reflektierende Beschichtung (76) eine Dicke von 5 Nanometern-5000 Nanometern beinhalten kann.

10. Vorgang zum Schützen eines Verbundlaminat-Kühlströmungskanals für ein Gasturbinentriebwerk, umfassend:
Ausbilden des Kanals (14) aus einem Substrat (54), wobei das Substrat (54) eine warme Seite (60) und eine der warmen Seite (60) gegenüberliegende kalte Seite (58) aufweist;
Beschichten des Substrats (54) mit einer Wärmedämmbeschichtung (62), die mit der warmen Seite (60) des Substrats (54) verbunden ist;
Beschichten der Wärmedämmbeschichtung (62) mit einer reflektierenden Beschichtung (76), die mit der dem Substrat (54) gegenüberliegenden Wärmedämmbeschichtung (62) verbunden ist, wobei die reflektierende Beschichtung eine Doppelschicht umfasst, die eine konforme Metallschicht (78) umfasst, die mit einer konformen anorganischen Beschichtung (80) bedeckt ist;
Verbinden einer Luftströmungsschicht (90) mit dem Substrat (54) auf der kalten Seite (58); und
Verbinden einer zusätzlichen Verbundschicht (94) mit der dem Substrat (54) gegenüberliegenden Luftströmungsschicht (90), wobei die zusätzliche Verbundschicht (94) Perforationen (96) umfasst, die fluidisch mit der Luftströmungsschicht (90) kommunizieren, wobei die Perforationen (96) konfiguriert sind, um Kühlfluid durchzuströmen.

11. Verbundlaminat nach einem der Ansprüche 1-6, 8 oder 9, Strömungskanal nach einem der Ansprüche 7-9 oder Vorgang nach Anspruch 10, wobei die reflektierende Beschichtung (76) eine konforme anorganische Beschichtung in einer einzigen Schicht umfasst.

12. Verbundlaminat nach einem der Ansprüche 1-6, 8 oder 9, Strömungskanal nach einem der Ansprüche 7-9 oder Vorgang nach Anspruch 10, wobei die konforme Metallschicht (78) Abmessungen in einem Bereich von 50 Nanometern bis 1000 Nanometern umfasst.

13. Verbundlaminat nach einem der Ansprüche 1-6, 8-9, 11 oder 12, Strömungskanal nach einem der Ansprüche 7-9, 11 oder 12 oder Vorgang nach Anspruch 10, 11 oder 12, wobei die Wärmedämmbeschichtung (62) eine Matrix aus Materialien umfasst, die aus ultrahochanorganischen Materialien ausgebildet sind, die ein Füllmaterial (66) beinhalten, das mit einem Bindemittel (74) derart zusammengehalten wird, dass ein anorganischer Inhalt von mehr als 75 % in der ausgebildeten Wärmedämmbeschichtung vorhanden ist.

14. Strömungskanal nach einem der Ansprüche 7-9 oder 11-13 oder Vorgang nach einem der Ansprüche 10-13, wobei die Luftströmungsschicht (90) Strömungskanäle (92) umfasst, die konfiguriert sind, um Kühlluft (100) durchzuströmen.

15. Strömungskanal nach einem der Ansprüche 7-9 oder 11-14 oder Vorgang nach einem der Ansprüche 10-14, wobei die Luftströmungsschicht (90) mindestens eines von einem wabenförmigen und einem offenzelligen Schaummaterial umfasst.

## Revendications

1. Stratifié composite comprenant :
un substrat (54) ayant un côté chaud (60) et un côté froid (58) en regard dudit côté chaud (60) ;
un revêtement barrière thermique (62) accouplé audit côté chaud (60) dudit substrat (54) ; et
un revêtement réfléchissant (76) disposé sur ledit revêtement barrière thermique (62) et accouplé à celui-ci, ledit revêtement réfléchissant comprenant une double couche comprenant une couche métallique conforme (78) recouverte d'un revêtement inorganique conforme (80).

2. Stratifié composite selon la revendication 1, comprenant en outre :
une couche à écoulement d'air (90) accouplée audit substrat (54) sur ledit côté froid (58).

3. Stratifié composite selon la revendication 2, dans lequel ladite couche à écoulement d'air (90) comprend au moins l'un parmi un matériau en nid d'abeille et un matériau alvéolaire à cellules ouvertes.

4. Stratifié composite selon la revendication 2 ou 3, dans lequel ladite couche à écoulement d'air (90) comprend des canaux d'écoulement (92) configurés pour l'écoulement d'air de refroidissement (100).

5. Stratifié composite selon la revendication 4, comprenant en outre :
une couche composite supplémentaire (94) accouplée à ladite couche à écoulement d'air (90) en regard dudit substrat (54), ladite couche composite supplémentaire (94) comprenant des perforations (96) qui communiquent fluidiquement avec les canaux d'écoulement (92) de la couche à écoulement d'air (90), dans lequel lesdites perforations (96) sont configurées pour l'écoulement d'un fluide de refroidissement.

6. Stratifié composite selon une quelconque revendication précédente, dans lequel ledit revêtement barrière thermique (62) comprend :
au moins une couche ; et/ou
une feuille préformée.

7. Conduit d'écoulement de refroidissement de stratifié composite pour un moteur à turbine à gaz comprenant :
le stratifié composite selon la revendication 1, dans lequel le substrat (54) forme ledit conduit, et ledit substrat (54) comprend l'un parmi un conduit polymère constitué de matières thermoplastiques, un conduit composite thermodurci constitué de l'un parmi un composite de résine époxyde renforcée par des fibres, de polyimide et de phtalonitrile, ou de bismaléimide, ou un matériau à matrice polymère ;
une couche à écoulement d'air (90) accouplée audit substrat (54) sur ledit côté froid (58) ; et
une couche composite supplémentaire (94) accouplée à ladite couche à écoulement d'air (90) en regard dudit substrat (54), ladite couche composite supplémentaire (94) comprenant des perforations (96) qui communiquent fluidiquement avec la couche à écoulement d'air (90), dans lequel lesdites perforations (96) sont configurées pour l'écoulement d'un fluide de refroidissement.

8. Stratifié composite selon l'une quelconque des revendications 1 à 6, ou conduit d'écoulement selon la revendication 7, dans lequel ladite couche à écoulement d'air (90) comprend un composite renforcé par des fibres de carbone avec des canaux d'écoulement d'air usinés.

9. Stratifié composite selon l'une quelconque des revendications 1 à 6 ou 8, ou conduit d'écoulement selon la revendication 7 ou 8, dans lequel le revêtement réfléchissant (76) peut présenter une épaisseur de 5 nanomètres à 5 000 nanomètres.

10. Procédé de protection d'un conduit d'écoulement de refroidissement de stratifié composite pour un moteur à turbine à gaz comprenant :
la formation dudit conduit (14) à partir d'un substrat (54), ledit substrat (54) ayant un côté chaud (60) et un côté froid (58) en regard dudit côté chaud (60) ;
le revêtement dudit substrat (54) avec un revêtement barrière thermique (62) accouplé audit côté chaud (60) dudit substrat (54) ;
le revêtement dudit revêtement barrière thermique (62) avec un revêtement réfléchissant (76) accouplé audit revêtement barrière thermique (62) en regard dudit substrat (54), ledit revêtement réfléchissant comprenant une double couche comprenant une couche métallique conforme (78) recouverte d'un revêtement inorganique conforme (80) ;
l'accouplement d'une couche à écoulement d'air (90) audit substrat (54) sur ledit côté froid (58) ; et
l'accouplement d'une couche composite supplémentaire (94) à ladite couche à écoulement d'air (90) en regard dudit substrat (54), ladite couche composite supplémentaire (94) comprenant des perforations (96) qui communiquent fluidiquement avec la couche à écoulement d'air (90), dans lequel lesdites perforations (96) sont configurées pour l'écoulement d'un fluide de refroidissement.

11. Stratifié composite selon l'une quelconque des revendications 1 à 6, 8 ou 9, conduit d'écoulement selon l'une quelconque des revendications 7 à 9 ou procédé selon la revendication 10, dans lequel ledit revêtement réfléchissant (76) comprend un revêtement inorganique conforme en une seule couche.

12. Stratifié composite selon l'une quelconque des revendications 1 à 6, 8 ou 9, conduit d'écoulement selon l'une quelconque des revendications 7 à 9 ou procédé selon la revendication 10, dans lequel ladite couche métallique conforme (78) présente des dimensions allant de 50 nanomètres à 1 000 nanomètres.

13. Stratifié composite selon l'une quelconque des revendications 1 à 6, 8 ou 9, 11 ou 12, conduit d'écoulement selon l'une quelconque des revendications 7 à 9, 11 ou 12, ou procédé selon la revendication 10, 11 ou 12, dans lequel ledit revêtement barrière thermique (62) comprend une matrice de matériaux formés à partir de matériaux inorganiques à ultra-haute performance, comprenant un matériau de charge (66) maintenus ensemble par un liant (74) de sorte qu'une teneur en matériaux inorganiques supérieure à 75 % soit présente dans le revêtement barrière thermique formé.

14. Conduit d'écoulement selon l'une quelconque des revendications 7 à 9 ou 11 à 13, ou procédé selon l'une quelconque des revendications 10 à 13, dans lequel ladite couche à écoulement d'air (90) comprend des canaux d'écoulement (92) configurés pour l'écoulement d'air de refroidissement (100).

15. Conduit d'écoulement selon l'une quelconque des revendications 7 à 9 ou 11 à 14, ou procédé selon l'une quelconque des revendications 10 à 14, dans lequel ladite couche à écoulement d'air (90) comprend au moins l'un parmi un matériau en nid d'abeille et un matériau alvéolaire à cellules ouvertes.
